(19)

**Europäisches Patentamt**

**European Patent Office**

**Office européen des brevets**

(11) **EP 4 283 275 B1**

(12) **EUROPEAN PATENT SPECIFICATION**

(45) Date of publication and mention
of the grant of the patent:
**18.06.2025 Bulletin 2025/25**

(51) International Patent Classification (IPC):
*G01M 11/00* *(2006.01)*

(21) Application number: **22315113.5**

(52) Cooperative Patent Classification (CPC):
**G01M 11/3181; G01M 11/3145**

(22) Date of filing: **24.05.2022**

(54) **POLARISATION GAIN EQUALIZATION IN AN OPTICAL FIBER MONITORING SYSTEM**

AUSGLEICH DER POLARISATIONSVERSTÄRKUNG IN EINEM FASEROPTISCHEN
ÜBERWACHUNGSSYSTEM

ÉGALISATION DE GAIN DE POLARISATION DANS UN SYSTÈME DE SURVEILLANCE DE FIBRE
OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.11.2023 Bulletin 2023/48**

(73) Proprietor: **Nokia Solutions and Networks Oy
02610 Espoo (FI)**

(72) Inventors:
• **DORIZE, Christian
78320 Le-Mesnil-Saint-Denis (FR)**

• **GUERRIER, Sterenn
91300 Massy (FR)**
• **AWWAD, Elie
92160 Antony (FR)**

(74) Representative: **Innovincia
11, avenue des Tilleuls
74200 Thonon-Les-Bains (FR)**

(56) References cited:
**EP-A1- 1 870 689     WO-A1-98/36256**

## Description

### TECHNICAL FIELD

The present disclosure generally relates to optical systems, and more particularly relates to distributed optical sensing systems using optical fibers.

### BACKGROUND

Optical fibers are sensitive to surrounding mechanical perturbations which affect light propagation in the fiber, e.g. induce fiber length variations, potentially resulting in variations of phase, intensity, and polarization of fiber-light propagating in the optical fiber. This effect can be exploited e.g. in standard single mode fibers (SSMF) deployed in telecommunication systems. Distributed Acoustic/Vibration Sensing (DAS/DVS) allows for detection of mechanical perturbation at various locations along an optical fiber using e.g. Rayleigh backscattering. Randomly distributed Rayleigh backscattering spots exist in the fiber as imperfections during its fabrication process. By capturing the optical signal that is reflected from these spots, optical phase changes induced by mechanical events impacting a deployed optical fiber may be detected and analyzed. Various optical systems of distributed sensing may use coherent optical-time-domain reflectometry (OTDR), which may also be referred to as phase-OTDR, in which an interrogator sends e.g. short pulses of coherent light into an optical fiber, and a coherent optical detector uses interferometry to detect optical phase variations of the back-scattered or back-reflected light.

A recent European patent application EP3460441 discloses a dual-polarization probing method to monitor back reflections from a span of optical fiber using two mutually orthogonal complementary (e.g. Golay) pairs of binary sequences applied simultaneously in phase and quadrature on two orthogonal polarizations of probing light. The method employs the two polarizations of light at both the optical receiver and the optical transmitter, and thus uses a multi-input, multi-output (MIMO) sensing approach.

EP1870689 discloses a method of measurement of the birefringence of an optical fibre and a method to configure the light generation means used in it.

### SUMMARY

An aspect of the present disclosure relates to an apparatus for sensing via an optical fiber link. The apparatus may comprise a digital source of test sequences, a coherent optical transmitter (COT) to transmit to the optical fiber 'link a light signal carrying different portions of the test sequences on orthogonal polarizations thereof, a coherent optical receiver (COR) capable of separately measuring different polarization components of backscattered light received therein and to output signals indicative thereof, an optical switch operable to selectively optically connect the COT and the COR to an end of an optical fiber link in a first configuration of the optical switch and to optically back-to-back connect the COT and the COR in a second configuration of the optical switch, and an electrical processor connected to receive the signals from the COT and configured estimate a gain imbalance between a first and a second of the orthogonal polarizations in at least one of the COT and the COR based on the signals received from the COR in the second configuration, and to measure a portion of the light signal backscattered by the optical fiber link in the first configuration.

A related aspect of the present disclosure provides a method for sensing via an optical fiber link, the method comprising: operating a coherent optical transmitter (COT) and a coherent optical receiver (COR) in a first configuration, the COT and the COR being optically connected to a same end of an optical fiber link in the first configuration; switching to operate the COT and COR in a second configuration, the COR being optically back-to-back connected to the COT in the second configuration; processing signals from the COR to estimate a polarization gain imbalance in at least one of the COT and the COR in the second configuration; and processing signals from the COR to measure a portion of the light signal backscattered by the optical fiber link in the first configuration; and wherein the COT transmits a light signal carrying different test signals on orthogonal polarizations thereof in each of the configurations; and wherein the COR separately measures different polarization components of received light and outputs signals indicative thereof in both configurations.

### BRIEF DESCRIPTION OF THE DRAWINGS

Embodiments disclosed herein will be described in greater detail with reference to the accompanying drawings which represent preferred embodiments thereof, in which like elements are indicated with like reference numerals, and wherein:

> FIG. 1 is a schematic block diagram of a dual-polarization (DP) optical fiber monitoring apparatus adapted to perform polarization-channel gain calibration and equalization;

FIG. 2 is a schematic block diagram of an embodiment of the DP optical fiber monitoring apparatus of FIG. 1 having variable-gain electrical amplifiers;

FIG. 3A is a schematic diagram of a DP coherent optical transmitter (COT) for transmitting digitally pre-compensated test signals over two orthogonal light polarizations;

FIG. 3B is a schematic diagram of a DP coherent optical transmitter (COT) having separately tunable variable-gain amplifiers in electrical modulation circuits of two polarization channels for polarization gain equalization;

FIG. 4 is a schematic diagram of a DP coherent optical receiver (COR) adopted to receive light signals from a DP COT of FIG. 1, 2, 3A, or 3B;

FIG. 5 is a flowchart of a method for controlling a polarization gain imbalance in a DP fiber monitoring apparatus of FIG. 1 or FIG. 2.

FIG. 6 is a schematic diagram illustrating a length of an optical fiber and a sequence of Jones 2x2 matrices describing distributed back-reflections of probing light propagating therein;

FIG. 7 is a flowchart of a method for operating the apparatus of FIG. 1 or FIG. 2 with gain imbalance and transmission channel equalization;

FIG. 8 is a schematic diagram illustrating a sequence of Jones matrices, and a related back-to-back intensity response, that may be computed by the apparatus of FIG. 1 or FIG. 2 from back-to-back DP measurements.

## DETAILED DESCRIPTION

In the following description, for purposes of explanation and not limitation, specific details are set forth, such as particular circuits, circuit components, techniques, etc. in order to provide a thorough understanding of the present invention. However, it will be apparent to one skilled in the art that the present invention may be practiced in other embodiments that depart from these specific details. In other instances, detailed descriptions of well-known methods, devices, and circuits may be omitted so as not to obscure the description of the present invention. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Note that as used herein, the terms "first", "second" and so forth are not intended to imply sequential ordering, but rather are intended to distinguish one element from another, unless explicitly stated. Similarly, sequential ordering of method steps does not imply a requirement of sequential order of their execution, unless explicitly stated. The term "connected" may encompass direct connections or indirect connections through intermediate elements, unless explicitly stated otherwise. The term "electrically connected" and its derivatives encompasses both DC (direct-current) and AC (alternating current) connections, unless explicitly stated otherwise. The term "polarization channel" is used herein to refer to parts of an optical transmission system, such as e.g. a dual-polarization (DP) optical transmitter or a DP optical receiver, that operates predominantly on a selected polarization component of a light signal. Different polarization components of a light signal may also be referred to as polarization tributaries, e.g. with reference to a system where they may be separately processed. The terms "polarization channel gain" and "polarization gain" are used herein interchangeably to refer to a scaling factor relating the optical intensity of the selected polarization component at an input of the polarization channel to an output of the polarization channel. The term "polarization gain imbalance" is used herein to refer to a situation when two polarization channels of a DP optical system, e.g. a DP optical transmitter or a DP optical receiver, has different polarization channel gains.

Furthermore, the following abbreviations and acronyms may be used in the present document:

"RF" Radio Frequency

"PSK" Phase Shift Keying

"*M*-PSK" PSK with an *M*-symbol constellation

"BPSK" Binary Phase Shift Keying

"QPSK" Quadrature Phase Shift Keying

"QAM" Quadrature Amplitude Modulation

"M-QAM" Quadrature Amplitude Modulation with an M-symbol constellation

"IQ" in-phase / quadrature

"DP" Dual Polarization

"MIMO" Multi-Input Multi-Output

"B2B" Back-to-Back

"DAC" Digital-to-Analog Converter

"ADC" Analog-to-Digital Converter

Embodiments described below relate to an apparatus, and a corresponding method, for distributed optical sensing of disturbances along an optical fiber, such as but not exclusively along an optical fiber link of an optical communication system. The apparatus and method employ a MIMO sensing technique, in which two polarizations of probe light are used at both the transmitter and the receiver, and are adopted for polarization gain equalization and/or digital compensation of dual-polarization linear signal distortions in the apparatus.

An aspect of the present disclosure provides an apparatus comprising: a digital source of test signals; a coherent optical transmitter (COT) to transmit a light signal carrying different portions of the test signals on orthogonal polarizations thereof; a coherent optical receiver (COR) capable of separately measuring different polarization components of light received therein and to output signals indicative thereof; an optical switch operable to selectively optically connect the COT and the COR to an end of an optical fiber link in a first configuration of the optical switch and to optically back-to-back connect the COT and the COR bypassing the optical fiber link in a second configuration of the optical switch; and an electrical processor connected to receive the signals from the COT and configured estimate a gain imbalance between a first and a second of the orthogonal polarizations in at least one of the COT and the COR based on the signals received from the COR in the second configuration, and to measure a portion of the light signal backscattered by the optical fiber link in the first configuration.

In some implementations at least one of the COR and the COT may comprise variable gain optical amplifiers (VGAs). In some of such implementations, the apparatus may further comprise a control circuit configured to tune the VGAs to a tuned state in which the gain imbalance is at least reduced. In some of those implementations, the apparatus may be configured to establish, having the switch in the second configuration and the VGAs in the tuned state, a back-to-back communication channel from the digital source to the processor, and the processor is configured to estimate and store a first dual-polarization (DP) response function for the back-to-back communication channel. The processor may be configured to estimate a DP optical backscattering response for the optical fiber link using the stored first response function, based on DP signals received from the COR when the apparatus operates in a fiber monitoring mode wherein the switch is in the second configuration and the VGAs are in the tuned state.

In some implementations the processor may be configured to modify the test signals prior to transmitting to perform at least one of: digitally pre-compensate for the gain imbalance in the COT, and to digitally pre-compensate a back-to-back channel response.

In some implementations the processor may be configured to perform at least one of: modifying the test signals prior to transmitting to digitally pre-compensate for the gain imbalance in the COT, or modifying the signals from the COR to post-compensate for the gain imbalance at the COR.

In any of the above implementations, the apparatus may be configured to estimate, based on the signals from the COR in the first and second configurations, a first set of 2x2 Jones channel matrices for the back-to-back communication channel, and a second set of 2x2 Jones channel matrices for back-scattering in the optical fiber link.

In any of the above implementations, the test signals may comprise two complementary data sequences, or two pairs of complementary data sequences, for transmitting over respective ones of the orthogonal polarization components, and the processor may be configured to correlate the signals received from the COR with the pairs of complementary data sequences.

In any of the above implementations, the apparatus may include a coherent light source optically coupled to the COT for providing coherent light for modulating the data sequences thereon and to the COR for providing a local oscillator signal.

A related aspect of the present disclosure provides a method comprising: operating a coherent optical transmitter (COT) and a coherent optical receiver (COR) in a first configuration, the COT and the COR being optically connected to a same end of an optical fiber link in the first configuration; switching to operate the COT and COR in a second configuration, the COR being optically back-to-back connected to the COT in the second configuration; processing signals from the COR to estimate a polarization gain imbalance in at least one of the COT and the COR in the second configuration; and processing signals from the COR to measure a portion of the light signal backscattered by the optical fiber link in the first configuration; wherein the COT transmits a light signal carrying different test signals on orthogonal polarizations thereof in each of the configurations; and wherein the COR separately measures different polarization components of received light and outputs signals indicative thereof in both configurations.

In some implementations of the method, at least one of the COR and the COT comprises a plurality of variable gain amplifiers (VGAs), and the method comprises tuning at least one of the VGAs to a tuned state to at least reduce the polarization gain imbalance. In some of such implementations, the method may further comprise processing the signals received from the COR in the back-to-back configuration with the VGAs in the tuned state, to at least estimate a back-to-back dual-polarization (DP) response function of the apparatus. In some of such implementations, the method may comprise estimating, for the first configuration with the VGAs in the tuned state, a DP channel response of the optical fiber link using the stored back-to-back DP response function.

In any of the above implementations of the method, the test signals may comprise two complementary data sequences, or two orthogonal pairs of complementary data sequences, and the method may comprise modulating said data sequences, or said pairs, over corresponding ones of the two orthogonal polarizations.

In any of the above implementations, the method may comprising computing a set of Jones matrices based on the signals received from the COT.

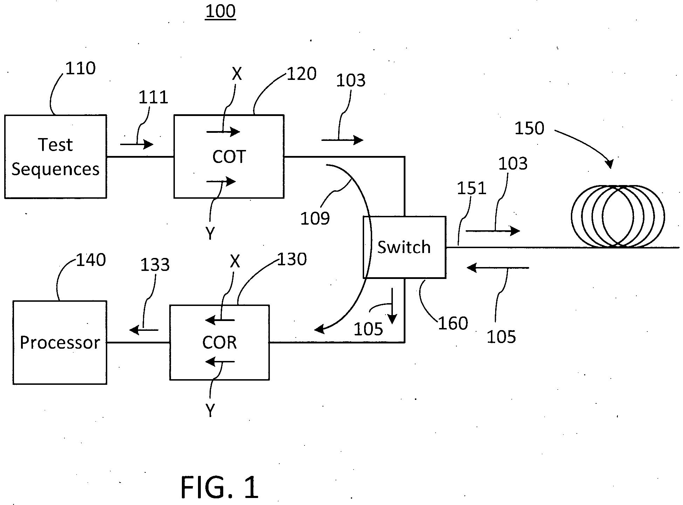

Referring now to FIG. 1, it illustrates a schematic block diagram of an example fiber sensing apparatus 100 ("apparatus 100") for monitoring distributed back-reflections in an optical fiber 150. In some embodiments, the optical fiber 150 may be, for example, an optical fiber link of a deployed optical fiber communication system, and apparatus 100 may be configured for monitoring optical fiber disturbances along the link by sensing changes in the Raleigh back-scattering within the fiber. In some embodiments, the optical fiber 150 may be, for example, a sensing element of a distributed optical sensor, in which case the optical fiber 150 may sometimes include a sequence of spaced apart fiber Bragg gratings (FBGs). The term "backscattering" as used herein encompassed back reflections from such FBGs.

Apparatus 100 includes a coherent optical transmitter (COT) 120, a coherent optical receiver (COR) 130, a test signal generator (TSG) 110, and a signal processor 140. In some embodiments, the TSG 110 and the processor 140 may be embodied using a shared digital signal processor. Apparatus 100 may include a reconfigurable optical connector (ROC) 160, hereinafter also referred to as an optical switch. The COT 120 and the COR 130 are configured for dual-polarization transmission and reception, respectively, of a light signal 103, which has a suitably long coherence length. In operation TSG 110 may generate test signals 111, different portions of which are separately modulated by the COT 120 onto different tributaries of the light signal 103, indicated in FIG. 1 as "X" and "Y". These X and Y tributaries may correspond to two different, typically substantially orthogonal, polarizations of the light signal 103. In an example embodiment, the X and Y polarizations may correspond to linearly-polarized components of the light signal 103, with their respective polarization axes aligned substantially along e.g. an x-axis and a y-axis of a Cartesian coordinate system. Embodiments in which the X and Y polarizations correspond to e.g. two substantially circular light polarizations, right-hand and left-hand, are also within the scope of the present disclosure. Here "substantially" may mean within performance tolerances of polarization-selective components used in the apparatus.

The ROC 160 is switchable between two configurations, to selectively optically connect the COT 120 and the COR 130 to an end 151 of an optical fiber link in a first configuration of the ROC, and to optically back-to-back connect the COT 120 and the COR 130 in a second configuration of the ROC, as schematically illustrated by a curved arrow 109. When the ROC is in the first configuration, apparatus 100 operates in a fiber sensing mode. When the ROC is in the second configuration, apparatus 100 operates in a self-calibration mode.

In the fiber sensing mode, the light signal 103 generated by the COT 120 is launched into the optical fiber 150, and the COR 130 receives back-scattered light 105, which is a portion of the coherent optical signal 103 reflected back within the optical fiber 150. The in-fiber reflections may be e.g. due to the Raleigh back-scattering within the optical fiber 150, or due to the presence of FBGs in the optical fiber in some embodiments, or a combination thereof. The COR 130 performs dual-polarization (DP) coherent reception of the back-scattered light 105 to separately measure signals in two different polarizations of the received light. Outputs electrical signals 133 of the COT comprise the test signals 111 transmitted by the COT 120 over the X and Y polarizations, which are modified by the propagation in the optical fiber 150, and, in part, by propagation within apparatus 100. The modifications of the test signals 111 carry information about perturbations in the optical fiber, the information being encoded e.g. in the optical phase and/or polarization state of the received back-scattered light 105. The processor 140 is configured to process, in the fiber-sensing mode of operation, the received signals 133 to monitor changes in the back-scattered light originating at different locations along the optical fiber to detect fiber disturbing events.

In the self-calibration mode, the outputs electrical signals 133 of the COT 130 carry information about signal distortions and imbalances within apparatus 100, e.g. in the COT 120 and the COR 130, which may affect the performance of the apparatus in the fiber sensing mode. The processor 140 operates in this mode to evaluate the signal distortions within apparatus 100, which may include estimating gain imbalances between polarization channels within the apparatus, and/or estimating DP linear signal distortions within the apparatus.

One source of distortions that may negatively affect fiber sensing performance is so-called polarization fading. When an optical fiber is probed by polarized light, the sensing sensitivity of the apparatus 100 may drop due to polarization transformations in the optical fiber, which may vary in time. The use of polarization diversity, i.e. two different light polarizations, at both the transmitter (COT 120) and the receiver (COR 130) to sense changes in the optical fiber 150 ("MIMO sensing") allows to eliminate, at least in theory, deleterious effects of polarization fading, and to increase the sensing sensitivity, that is the ability to sense mechanical or other environmental fiber events of lower energy thanks to a stronger received signal or a lower noise floor; see e.g. S. Guerrier, C. Dorize, E. Awwad, and J. Renaudier, 'Introducing coherent MIMO sensing, a fading-resilient, polarization-independent approach to $\phi$-OTDR', Opt. Express, vol. 28, no. 14, p. 21081, Jul. 2020, doi: 10.1364/OE.396460.

The inventors of the present patent application have discovered that the noise floor observed experimentally with DP MIMO sensing may not be as low as theoretically predicted. The sensing apparatus comprises a mixture of optical, electro-optical, and electrical devices both at the transmitter and the receiver parts, which may be a source of sensing-affecting signal distortions. The test signals 111 transmitted over two different polarizations propagate through different parts of the apparatus, i.e. different "polarization channels", and may be differently distorted. One significant source of the distortions may be a gain imbalance between the polarization channels at the COR and/or the COT; the presence of such polarization gain imbalance may significantly complicate achieving fiber sensing that is unaffected by polarization fading.

Accordingly, apparatus 100 in the calibration mode of operation may be configured, at least, to estimate the polarization gain imbalance within the apparatus itself, and in some embodiments at least partially compensated for them. In this mode, the COR 130 may operate as described above to transmit the test signals 111, or some variations thereof, over the X- and Y- polarizations of the light signal 103, and a portion of the light signal 103 is coupled into the COR 130 bypassing the optical fiber 150 for performing back-to-back measurements.

In some embodiments, when apparatus 100 operates in the calibration mode, the processor 140 is configured to estimate a polarization gain imbalance in at least one of the COT 120 and the COR 130, i.e. a gain imbalance experiencing by signals transmitted over the two polarizations, or two polarization tributaries, that are used in at least one of the COT 120 and the COR 130. In some embodiments, the processor 140 may be configured to estimate, based on the signals 133 received from the COR 130 in the back-to-back configuration, a polarization gain imbalance in each of the COT 120 and the COR 130.

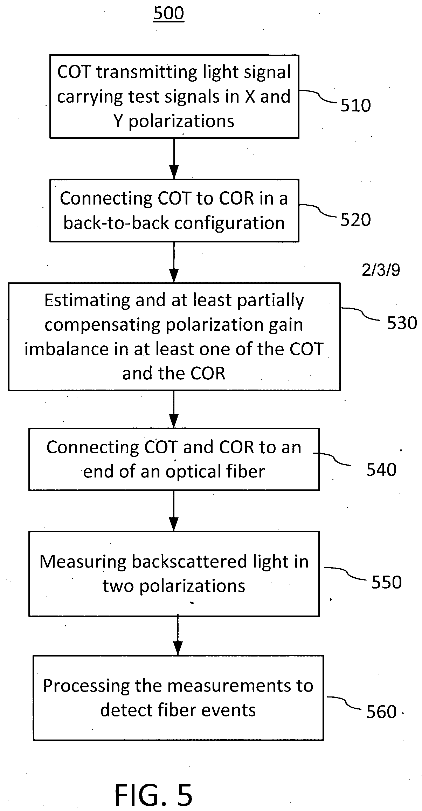

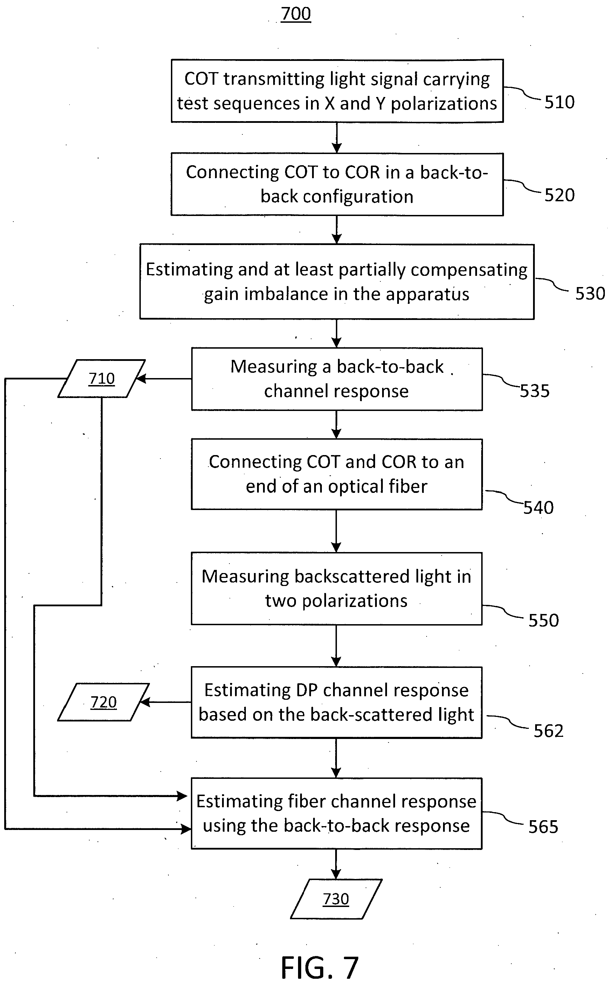

The switching between the fiber sensing mode and the calibration mode, e.g. in response from a signal from a controller, may include switching the ROC 160 between the first and second configurations, and directing the processor 140 to perform either the fiber-sensing MIMO processing of the received signals 133 when the ROC 160 in the first state, or the self-calibration MIMO processing of the signals 133 when the ROC 160 in the second state. Example MIMO processing of the signals 133 in these two mode of operations by a digital processor, such as e.g. processor 140, is described below with reference to FIGs. 5 and 7.

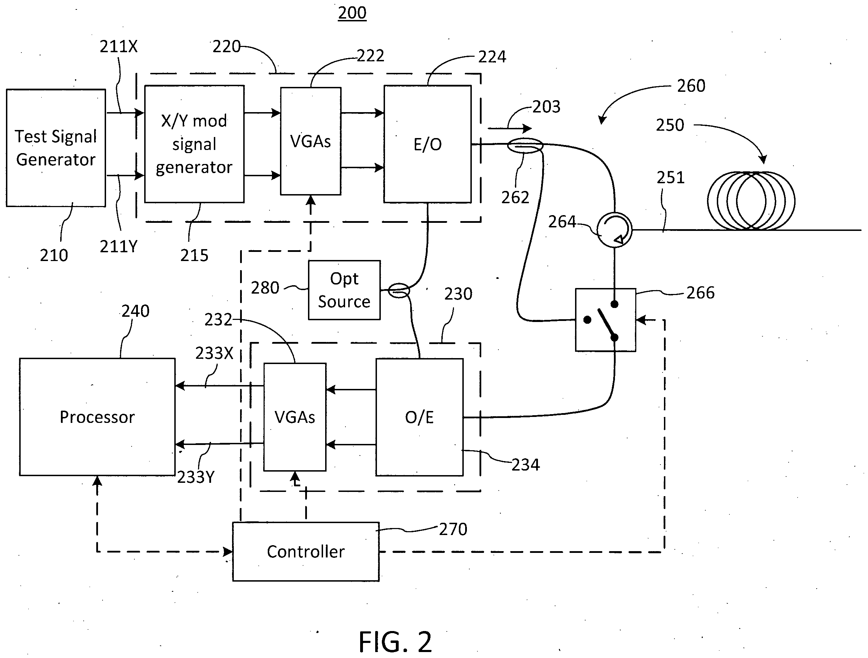

FIG. 2 illustrates an example optical fiber sensing apparatus 200 ("apparatus 200") according to an embodiment. Apparatus 200 may be an embodiment of apparatus 100 and is switchable between a fiber sensing mode and a self-calibration mode, e.g. in response to a signal from a controller 270. Apparatus 200 includes a test sequence generator (TSG) 210, a COT 220 comprising a DP electro-optic (EO) converter 224, and a COR 230 comprising a DP opto-electric (OE) converter 234. The COT 220 and the COR 230 may be embodiments of the COT 120 and the COR 130, respectively, described above with reference to FIG. 1.

The COT 220 and the COR 230 may be switchably connected by a ROC 260 either back-to-back for apparatus self-calibration, or to an end 251 of an optical fiber 250 for sensing. The ROC 260, which is an example embodiment of ROC 160, includes an optical coupler or tap 262, an optical circulator 264, and a 2x1 optical switch 266. The optical circulator 264 connects a fiber end port 251 of an optical fiber 250 being monitored to the COT 220, and directs back-scattered light from the optical fiber 250 to an optical switch 266. In another embodiment, the optical 2x1 switch 266 may be disposed to connect the second port of the circulator 264 to the fiber end 251. The optical 2x1 switch 266 is operable to switch between a first state and a second state. As illustrated, in the first state the optical 2x1 switch 266 connects the COR 230 to the fiber end 251 via the circulator 264 to direct the back-scattered light into the COR 230. In the second state the optical 2x1 switch 266 connects the COR 230 back-to-back to the output of the COT 220, bypassing the circulator 264 and the fiber end 251. Thus the ROC 260 is configured to switch the apparatus 200 between the fiber sensing mode and the self-calibration mode.

The TSG 210 is an embodiment of the TSG 110, and is configured to generate two distinct test signals 211X and 211Y, or two distinct sequences of test signals, to be transmitted by the COT 220 over respective polarizations tributaries of a light signal 203, as described above with reference to FIG. 1 and COT 120. The COT 220 includes a two-channel modulation signal generator 215 for converting the test signals 211X and 211Y to modulation signals for the X-polarization and the Y-polarization channels, respectively. The two-channel modulation signal generator 215 may be followed by variable gain amplifiers (VGAs) 222, which may be a part of a modulation driver, and the DP EO converter 224 for converting the modulation signals into a coherent light signal 203 carrying the test signals 211X and 211Y over, respectively, the X-polarization and Y-polarization components of the coherent light signal 203. The VGAs 222 may be configured for amplifying the modulation signals for the X and Y polarizations with separately tunable gains. The COT 220 and the COR 230 may be configured to use a variety of modulation formats, including but not limited to BPSK, QPSK, M-QAM, and M-PAM.

The DP EO converter 224 is configured to separately modulate two light portions of coherent light received from a coherent light source 280. In some embodiments, the DP EO converter 224 may be followed by an optical amplifier, such as e.g. an erbium-doped fiber amplifier (EDFA). In an embodiment, the coherent light source 280 is configured to emit light having a large coherence length, e.g. at least equal to, or preferably at least twice, a length of the optical fiber 250 to be tested. The coherent light source 280 may further provide reference light, also referred to as local oscillator (LO) light, to the DP OE 234 of the COR 230, for homodyne detection of modulation in two polarization channels of the COR 230. The DP OE converter 234 is configured to separately detect or measure signals modulating two different polarizations of a received light signal, and to convert the two detected signals into electrical signals 233X and 233Y, each carrying signals detected for a corresponding one of the two different polarizations of the received light ("polarization channels"). Digitized versions of the electrical signals 233X and 233Y are provided to a processor 240 for the fiber-sensing or apparatus self-calibration processing. In some embodiments the COR 230 may further include VGAs 232 for amplifying, with separately tunable gains, the electrical signals 233X and 233Y in the two polarization channels prior to the processing by the processor 240.

The processor 240 may be an embodiment of the processor 140, and is configured for digital processing of the received signals 233X, 233Y to perform an estimation of a transmission channel connecting the COT 220 to the COR 230, e.g. as described above with reference to the processor 140, or as further described below in this document for example embodiments.

When apparatus 200 operates in the self-calibrating mode, the processor 240 may process the received DP signal 233X and 233Y to estimate an imbalance between gains experiencing by signals in the two polarization channels ("polarization gain imbalance") for at least one of the COT 220 and the COR 230. In some embodiments, VGA gains at the COT 220 and/or the COR 230 may be tuned at the calibration stage to at least partially compensate for the estimated polarization gain imbalance. In some embodiments, the controller 270 may be operatively coupled to the processor 240 and to the VGAs 222 and/or 232 to tune at least some of the VGAs 222 and/or 232 to counteract the estimated gain imbalance. In some embodiments, the polarization gain imbalance estimation may be used in the fiber sensing mode of operation for digital pre-compensation of the test signals prior to the transmission, and/or for digital post-compensation of the received signals. In some embodiments, the analog gain tuning at the calibration stage may be combined with the digital pre- or post-compensation at the fiber sensing stage. In some embodiments, the processor 240 may use signals received at the calibration stage to estimate and store a back-to-back channel transfer function of the apparatus, and to use the estimated back-to-back channel transfer function in the sensing mode, e.g. to compensate for linear signal deterioration, such as e.g. inter-symbol interference, in the electrical and electro-optical components of the COT 220 and the COR 230. In some embodiments, the controller 270 may also generate control signals to control the 2x1 optical switch 266 for performing fiber sensing measurements or the apparatus self-calibration measurements.

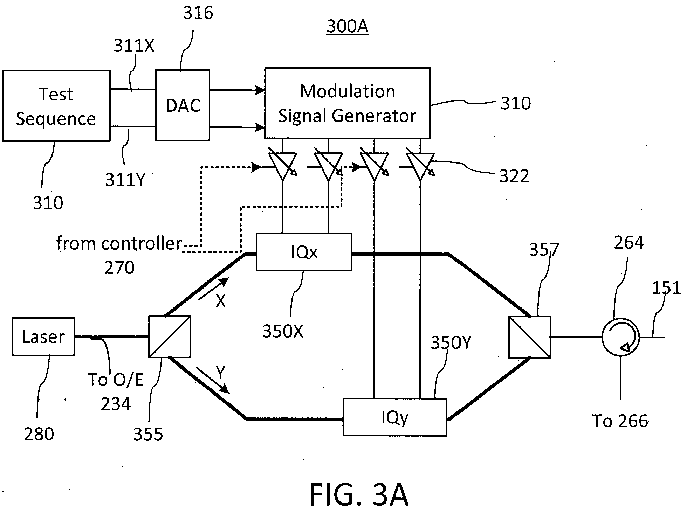

FIG. 3A schematically illustrate an example embodiment of the COT 220, which is referred to as the COT 300A. In this embodiment, the DP EO converter 224 of COT 220 is embodied using two optical modulators 350X and 350Y optically connected in parallel between a polarization splitter 355 and a polarization combiner 357. In the illustrated embodiment, the optical modulators 350X and 350Y are each embodied as an optical IQ modulator, e.g. a nested Mach-Zehnder modulator (MZM), configured for QPSK, M-QAM, or M-PAM modulation as known in the art. In other embodiments, the optical modulators 350X and 350Y may each be embodied with an MZM configured, e.g. for BPSK modulation. A digital test sequence generator 310, which may be an embodiment of TSG 210, is configured to generate test signals 311X and 311Y in the form of digital test data sequences, for transmitting over the X- and Y-polarizations, respectively. The test signals 311X and 311Y are converted to analog domain by a DAC 316. A modulation signal generator 310 further converts each of the test signals 311X and 311Y into in-phase (I) and quadrature (Q) modulation signals, which are then amplified by VGAs 322. The gains of the VGAs 322 may be tuned separately for the X- and Y-polarization channels responsive to a control signal, e.g. from the controller 270, to at least partially compensate for the polarization gain imbalance as estimated from the back-to-back measurements.

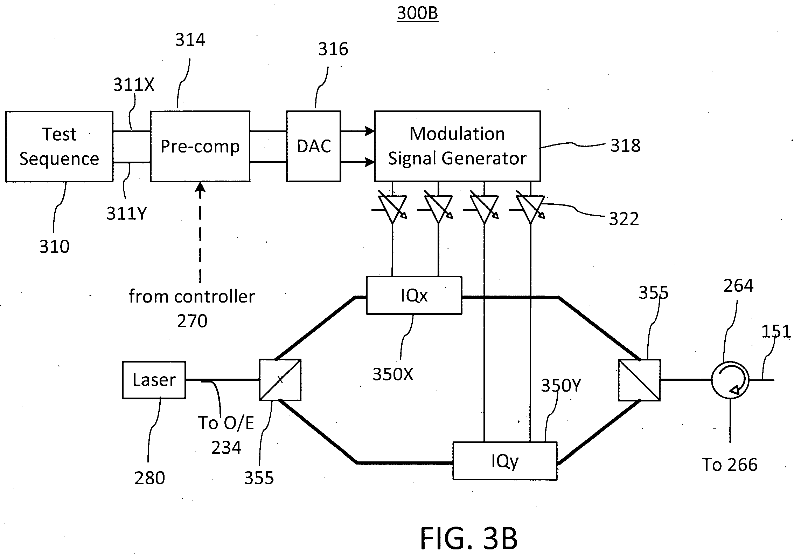

FIG. 3B schematically illustrate a COT 300B, which may be an embodiment of the COT 220 and is a modification of the COT 300A configured for digital pre-compensation of a polarization gain imbalance, e.g. as obtained using back-to-back measurements by the processor 240 (FIG. 2). In this embodiment, test signals 311X, 311Y may be first digitally pre-processed, in a fiber sensing mode of operation, using a pre-compensation processor 314, so as to at least partially pre-compensate for a polarization gain imbalance estimated from back-to-back measurements at the calibration stage. The pre-compensated digital signals are converted to analog domain by the DAC 316, and passed to the modulation signal generator 318 for converting to the I and Q modulating signals in each of the two polarization channels.

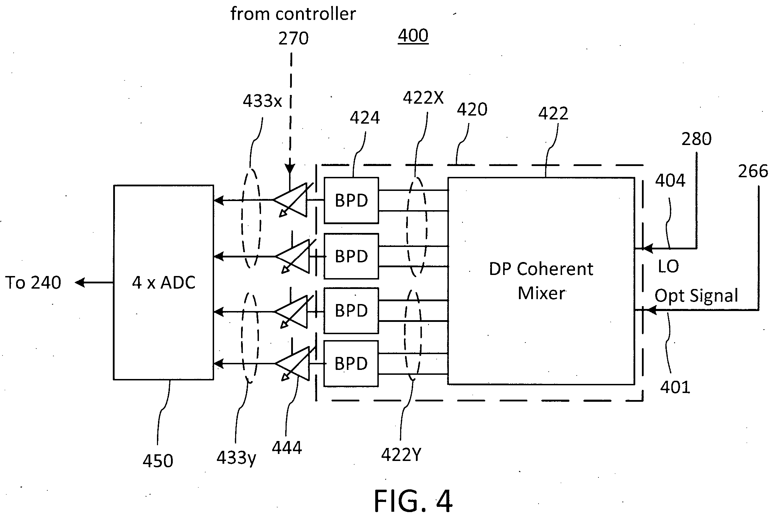

FIG. 4 illustrates an example embodiment of the COR 230, which is referred to below as the COR 400. A DP OE converter 420, which may be an embodiment of the DP OE converter 234 of COR 230, includes a DP optical mixer 422 coupled to balanced photodetectors (BPD) 424. The DP optical mixer 422 is configured to separately mix two different polarization complements, e.g. "X" and "Y", of a received optical signal 401 with corresponding polarization components of LO light 404. The LO light 404 and the received optical signal 401 may originated from a same source of coherent light, e.g. the optical source 280, and may retain a sufficient degree of mutual coherency for phase-sensitive measurements. The DP coherent optical mixer 422 may include, e.g. two 90° optical hybrids, one per polarization channel, connected at their inputs to corresponding outputs of two optical polarization splitters (not shown). Output optical signals of the DP coherent optical mixer 422 in each polarization channel, denoted as 422X and 422Y, are separately converted to electrical signals 433X and 433Y by the BPDs 424. The electrical signals 433X and 433Y may then be amplified separately in each of the two polarization channel, e.g. by amplifiers 444, digitized by an ADC 450, and passed to a signal processor, e.g. the processor 240 or 140 described above. In some embodiments the amplifiers 444 may be VGAs connected to have their gains adjustable by a controller, e.g. the controller 270 of FIG. 2, independently for each polarization channel.

The operation of a fiber sensing apparatus of the present disclosure, such as apparatus 100 or apparatus 200, in the fiber sensing mode and the self-calibration mode is further described below with reference to FIGs. 5-8 for example embodiments.

In an embodiment, a fiber sensing apparatus, such as the apparatus 100 or 200 described above, may implement a method that includes the following operations: switchably operating a COT and a co-located COR in a first configuration and in a second configuration, wherein the COT and the COR are optically connected either to an end of an optical fiber link in the first configuration, or back-to-back to each other in the second configuration; the COT transmitting a light signal carrying different test signals on orthogonal polarizations thereof; the COR separately measuring different polarization components of received light and outputting signals indicative thereof in both the first and second configurations; processing the signals received from the COR in the second configuration to estimate gain imbalance in at least one of the COT and the COR; processing the signals received from the COR in the first configuration to measure a portion of the light signal backscattered by the optical fiber link.

FIG. 5 illustrates a method 500 for operating a fiber sensing apparatus, such as e.g. the apparatus 100 or 200, according to an embodiment. The method 500 includes: (510) a coherent optical transmitter; e.g. COT 120, 220, 300A, or 300B, transmitting a light signal carrying different test signals on orthogonal polarizations of the light signal; (520) connecting the coherent optical transmitter to the coherent optical receiver in a back-to-back configuration, (530) estimating, and in some embodiments at least partially compensating, polarization gain imbalance in at least one of the coherent optical transmitter and the coherent optical receiver; (540) connecting the coherent optical transmitter and the coherent optical receiver to a same end of an optical fiber to be tested; (550) the coherent optical receiver separately measuring different polarization components of received light to monitor fiber events; and (560) processing signals received from the coherent optical receiver to measure a portion of the light signal backscattered by the optical fiber in the fiber-sensing configuration to detect fiber-affecting events. The processing may include, e.g. detecting variations of at least one of the phase and the amplitude of the back-scattered radiation originating from a particular section of the optical fiber.

For an example embodiment, the estimation (step 530) of polarization gain imbalances in the coherent optical transmitter and/or the coherent optical receiver of the fiber sensing apparatus, e.g. the apparatus 100 or 200, performed by an associated digital processor, e.g. the processor 140 or 240, may be described using a Jones matrix formalism and the following approximate mathematics. A Jones matrix is a 2x2 matrix that describes conversion between an input and an output polarization states of an optical system, when the input and an output polarization states are each described by a two-element Jones vector $(E_x, E_y)^T$; here "T" indicates a transpose operation, and $E_x$ and $E_y$ represent amplitudes of two orthogonal polarization components of an optical field, e.g. the X-polarization and the Y-polarization components of the optical field. A transfer function of a dual-polarization communication channel in the back-to-back configuration, from a source of test signals, e.g. 110, 210, or 310, to a receiver-coupled processor, e.g. 140 or 240, may be approximately described using a 2x2 matrix $\mathbf{H}_{b2b}$ defined by the following Equation (1):

$$\mathbf{W} = \mathbf{H}_{b2b}\mathbf{U}. \qquad (1)$$

Here U is an input Jones vector which elements are the test signals at the input to the COT, e.g. 211X and 211Y, or 311X and 311Y, and W is a two-element vector which elements are signals in the X and Y polarization channels, e.g. 233X and 233Y, or 433X and 433Y, that a corresponding COR provides to a coupled processor, e.g. the processor 140 or 240. In some approximation, e.g. in embodiments where non-orthogonality of the X and Y polarizations at the COT and the COR is negligible, and the polarization-dependent (optical) loss (PDL) of the back-to-back optical connection between the COT and the COR is insignificant, the DP back-to-back (B2B) channel transfer matrix $\mathbf{H}_{b2b}$ satisfies the following equation (2):

$$\mathbf{H}_{b2b} = \begin{bmatrix} h_{xx} & h_{xy} \\ h_{yx} & h_{yy} \end{bmatrix} = \begin{bmatrix} c & 0 \\ 0 & d \end{bmatrix} \mathbf{H}_{opt} \begin{bmatrix} a & 0 \\ 0 & b \end{bmatrix} \qquad (2)$$

Elements $h_{xx}$, $h_{xy}$, $h_{yx}$, $h_{yy}$ of the DP B2B channel transfer matrix $\mathbf{H}_{b2b}$ are complex numbers relating the two polarization components, $E_{rx}$ and $E_{ry}$, of the optical field detected at the COR to the corresponding polarization components $E_{tx}$ and $E_{ty}$ of the optical field as generated at the corresponding COT. The parameters $a$ and $b$ describe relative amplification of the X-polarization and Y-polarizations signals at the COT, $c$ and $d$ describe relative amplitude amplification of the X-polarization and Y-polarizations signals at the COR. The amplification parameters $a$, $b$, $c$ and $d$ may be complex-valued, e.g. when a quadrature IQ modulation format is used in the optical transmission. The absolute values of the parameters $a$ and $b$, $|a|$ and $|b|$, may be referred to as relative polarization gains, or polarization gain coefficients, of the COT, and the absolute values of the parameters $c$ and $d$, $|c|$ and $|d|$, may be referred to as the relative polarization gains, or polarization gain coefficients, of the COR. The COT-to-COR optical connection in the back-to-back configuration may be described by a rotation matrix $\mathbf{H}_{opt}$:

$$\mathbf{H}_{opt} = \begin{bmatrix} e & f \\ -f^* & e^* \end{bmatrix}. \quad (3)$$

Matrix $\mathbf{H}_{opt}$ describes polarization rotation that may occur in the back-to-back optical connection from the COR to the COT, e.g. in a connecting optical waveguide such as a length of an optical fiber, and/or an optical switch. In the absence of PDL, $\mathbf{H}_{opt}$ is a unitary matrix with $|e|^2 + |f|^2 = 1$. Hence, the absolute values, i.e. modules, of $e$ and $f$ may be expressed as a function of a rotation angle $\theta$, with $|e| = |\cos\theta|$ and $|f| = |\sin\theta|$. In embodiments where the test signals have a relatively small bandwidth, e.g. less than 500 MHz, or about 100MHz or less in some embodiments, frequency selectivity of the transmission channel may be neglected, and the channel matrix $\mathbf{H}_{b2b}$ may be single-tap.

From equations (1) - (3), the following system of equations may be obtained:

$$|h_{xx}|^2 = |ac\cos\theta|^2 = ACE$$

$$|h_{yy}|^2 = |bc\sin\theta|^2 = BC(1-E)$$

$$|h_{yx}|^2 = |ad\sin\theta|^2 = AD(1-E) \qquad (4)$$

$$|h_{yy}|^2 = |bd\cos\theta|^2 = BDE$$

where parameters $A$, $B$, $C$, and $D$ denote squares of absolute values of the corresponding polarization gain coefficients, and represent relative power gains for the respective polarization channels at the COT and the COR:

$$A = |a|^2, B = |b|^2, C = |c|^2, D = |d|^2, E = |e|^2 \qquad (5)$$

The determinant of the matrix $\mathbf{H}_{b2b}$ provides an estimate of the product of the four gain parameters $A$, $B$, $C$, $D$:

$$ABCD = (\det(\mathbf{H}_{b2b}))^2 \qquad (6)$$

In an embodiment, a processor of the fiber-sensing apparatus, e.g. the processor 140 or 240, may be configured to estimate elements $h_{i,j}$ of the back-to-back channel response matrix $\mathbf{H}_{b2b}$ based on signals measured by the associated COR, e.g. 130 or 230, in two polarization channels thereof. The processor may further be configured to numerically solve the non-linear system of equations (4) and (6) to compute relative gains for the two polarization for at least one of the COT, i.e. $|a|$ and $|b|$, and for the COR, i.e. $|c|$ and $|d|$. One skilled in the art would be able to select a suitable computer-executable algorithm to solve the system of non-linear equations (4) and (6); by way of a non-limiting example, methods based on non-linear least squares algorithms, e.g. a trust-region or a Levenberg-Marquardt method, maybe used. The processor may also be configured to estimate the strength of the polarization cross-talk in the back-to-back configuration, as defined by parameters $|e|$ and $|f|$ or, equivalently, the polarization rotation angle $\theta$.

In one embodiment the relative polarization gain coefficients for only one of the COT and the COR may be estimated, e.g. when the other of the COT and the COR are known to be suitably balanced. In one embodiment, a control circuit of the apparatus coupled to the processor, e.g. the controller 270 of FIG. 2, may be configured to tune gains of one or more VGAs of at least one the COT and the COR, e.g. the VGAs 222 and/or 232, or the VGAs 322 and/or 424, to at least partially compensate for the estimated polarization gain imbalance(s). In one embodiment, the control circuit may be configured to tune the gains of at least one of the VGAs of both of the COT and the COR to at least partially compensate for the estimated polarization gain imbalances separately for the COT and the COR.

By way of example, the processor at step (530) may estimate the ratios $|a| / |b| = 1.2$, $|d| / |c| \cong 1.2$, and the control circuit may decrease the gain of the X-channel VGA(s) of the COT by a corresponding proportion, e.g. by approximately 20%, or increase the gain of the Y-channel VGA(s) of the COT by a corresponding proportion, e.g. by approximately 20%; the control circuit may further increase the gain of the X-channel VGA(s) of the COR by a corresponding proportion, e.g. by approximately 20%, or decrease the gain of the Y-channel VGA(s) of the COR by a corresponding proportion, e.g. by approximately 20%.

In some embodiments, at step (530) the processor may direct the control circuit to tune at least one of the X-channel VGA(s) or the Y-channel VGAs of the COT to a tuned state wherein the polarization gain imbalance at the COT, e.g. estimated as $\left|1 - \frac{|a|}{|b|}\right|$ or $\left|1 - \frac{A}{B}\right|$, is at least reduced. The processor may further direct the control circuit to tune at least one of the X-channel VGA(s) or the Y-channel VGAs of the COR to a tuned state wherein the polarization gain imbalance at the COR, e.g. estimated as $\left|1 - \frac{|c|}{|d|}\right|$ or $\left|1 - \frac{C}{D}\right|$, is at least reduced. In some embodiments, the processor may repeat the process of polarization gain imbalance estimation followed by the VGA tuning until the estimated values of the polarization gain imbalances at both the COT and the COR are below a target threshold or thresholds.

In an example embodiment, the processor 140 or 240 may be configured to estimate the elements $h_{xx}$, $h_{xy}$, $h_{yx}$, $h_{yy}$ of a Jones matrix of a transmission channel, e.g. the back-to-back channel response matrix $\mathbf{H}_{b2b}$, based on a knowledge of the test signals 111 generated by the corresponding TSG, e.g. 110, 210, or 310, in the back-to-back mode of operation. In some embodiments, the processor 140 or 240 may estimate the elements $h_{xx}$, $h_{xy}$, $h_{yx}$, $h_{yy}$ based on a comparison between the signals detected by the COR for two different light polarizations, e.g. pairs of signals 233X and 233Y or 433X and 433Y, and the test signals 211 or 311, respectively, transmitted by the corresponding COT over the two polarizations. In some embodiments, estimating the elements $h_{xx}$, $h_{xy}$, $h_{yx}$, $h_{yy}$ may include correlating the signals detected by the COR for two different light polarizations and the test signals transmitted by the corresponding COT over the two polarizations.

Once the polarization gains at the COT and/or the COT are estimated, and in an example embodiment at least partially equalized, the polarization sensing apparatus, e.g. 100 or 200, may be switched to the fiber sensing mode, and steps or operations 550 and 560 are performed. Operations at step 550 may include e.g. switching the 2x1 optical switch 266 to the first configuration in which the COT and the COR are connected to an end of the optical fiber being sensed.

In some embodiments, the estimated polarization gain imbalances may be digitally pre-compensated at the COT and/or post-compensated at the COR without adjusting amplifier gains in the analog portions of the respective circuits. In some embodiments, the processor may be configured, while the apparatus in the back-to-back calibration mode, to repeat the measurements of the polarization gain imbalance(s) followed by the VGA tuning, and/or adjusting parameters of the digital pre- or post-compensation of the transmitted or received signals in other embodiments, until the estimated polarization gain imbalances at the COR and the COT are within desired tolerances.

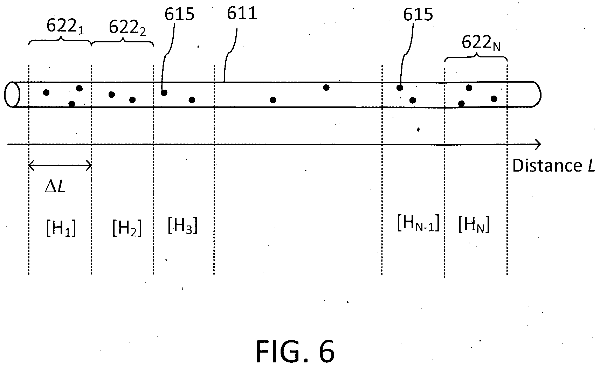

Referring to FIG. 6, in an embodiment the step or operation 560 may include processing signals measured by the COR in two polarization channels, e.g. signals 233X, 233Y or 433X, 433Y, to compute a series of Jones matrices $H_n$, $n = 1, ..., N$; the processing may include, e.g. correlating the measured signals with the original test data signals, e.g. 211X, 211Y or 311X, 311Y, provided to the COT. These Jones matrices characterize the back-scattering responses of consecutive sections $622_1$, $622_2$, ..., $622_N$ of an optical fiber 611 under test. In FIG. 6, the optical fiber 611 may represent e.g. a length of the optical fiber 150 of FIG. 1 or a length of the optical fiber 250 of FIG. 2. Non-uniformities in the optical fiber 611 that induce the back-scattering of light propagating in the fiber are symbolically indicated by dots 615.

The length $\Delta L$ of each fiber section $622_i$ defines the spatial resolution of the sensing, and is a function of the test signal symbol rate and of the oversampling factor at the COR. In some embodiments, the processing may include generating four polarization transfer functions $H_{xx}$, $H_{xy}$, $H_{yx}$, and $H_{yy}$, each containing corresponding elements of the $N$. Jones matrices $H_n$, e.g. in the form of four vectors:

$$H_{xx} = [h_{xx}(1), h_{xx}(2), ..., h_{xx}(N)], \qquad (7)$$

$$H_{yy} = [h_{yy}(1), h_{yy}(2), ..., h_{yy}(N)], \qquad (8)$$

$$H_{xy} = [h_{xy}(1), h_{xy}(2), ..., h_{xy}(N)], \qquad (9)$$

$$H_{yx} = [h_{yx}(1), h_{yx}(2), ..., h_{yx}(N)]. \qquad (10)$$

These four vectors comprise a dual-polarization back-scattering response along the optical fiber, and may be used in some embodiments for identifying approximate locations of fiber affecting events. In some embodiments, a phase $\phi$ for the back-scatters light may be estimated per segment 622, e.g. from a phase of the determinant $D(n)$ of the Jones matrix of the segment:

$$\phi(n) = 0.5 \cdot \arg(D(n)) \qquad (11)$$

$$D(n) = h_{xx}(n)h_{yy}(n) - h_{xy}(n)h_{yx}(n) \qquad (12)$$

The phase $\phi$ may be periodically estimated to capture its evolution for each fiber segment 622 to obtain a spatio-temporal map of fiber-affecting events.

In some embodiments, apparatus 100 or 200 may further be configured to perform DP channel equalization in the fiber sensing mode, e.g. to at least partially compensate for linear signal deterioration in the COT and the COR at each polarization channel, e.g. pulse spreading and inter-symbol interference (ISI) associated therewith.

FIG. 7 illustrates a flowchart of a method 700 which may be implemented by apparatus 100 or 200 according to an example embodiment. Method 700 may be a version of method 500 described above, which includes an additional step or operation 535 in the calibration configuration, and in which the processing of measurements performed in the fiber-sensing configuration (step 560 of method 500) includes signal processing steps 562 and 565. The step or operation 535 includes estimating a DP B2B channel response 710, and saving the estimated DP B2B response 710 in a processor-readable memory. The estimated DP B2B response 710 accounts for possible signal deterioration in the fiber-sensing apparatus itself, e.g. due to hardware limitations at the COT and the COR. The step or operation 562 includes DP processing of back-scattered light from an optical fiber under test to estimate a DP end-to-end channel response 720 in the fiber-sensing mode (step 550). The step or operation 565 includes estimating a DP channel response 730 for back-scattering in the optical fiber, based on the a DP end-to-end channel response 720 measured in the fiber-sensing mode, and the DP B2B channel response 710 saved at 535.

Operations performed by the apparatus 100 or 200 at step 535 may be similar to those performed in the fiber sensing mode at step 562, e.g. as described above with reference to FIG. 6. These operations may include periodically transmitting, by the COT, synchronized test sequences of digital symbols over two different polarizations, and estimating, by processor 140 or 240 for the back-to-back channel, a sequence of Jones matrices $H_{b2b}$, or elements thereof. The processor may then select one or more of the Jones matrices $H_{b2b}$ for estimating the polarization gain imbalance, e.g. as described above with reference to equations (4)-(6).

Referring to apparatus 200 of FIG. 2 by way of example, the processor 240 may, at step 530 and/or 535, process signals 233X and 233Y received from the COR 230 in the back-to-back configuration to estimate a subset $\{H_{b2b}\}$ of $P$ Jones matrices $H_{b2b}(n)$, e.g. with $n = 1, ..., P$, where $P$ may be smaller than $N$. The subset $\{H_{b2b}\}$ carries time-dependence information for a DP transfer function of the back-to-back channel. In an embodiment, the subset $\{H_{b2b}\}$ may be estimated e.g. using a correlation processing, e.g. as described below with reference to equations (13)-(16) or (19)-(22) for an embodiment.

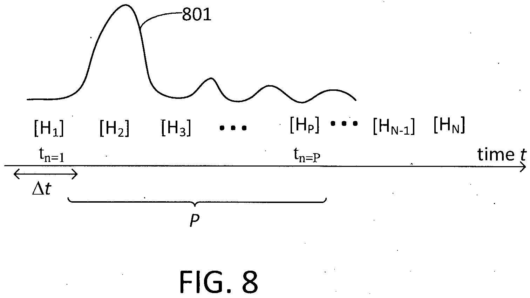

In some embodiments, the processor 140 or 240 may estimate, at step 530 or 535, an intensity transfer function $I(n)$ 801 (FIG. 8) for the B2B channel response. The intensity $I(n)$ for each time interval $t_n$ may be typically estimated by computing an absolute value of the determinant $D$ of a Jones matrix, $I(n)=|D(n)|$. One of the back-to-back Jones matrices $H_{b2b}(n)$ with a suitably large intensity, e.g. at or near the maximum of the intensity transfer function $I(n)$ 701, may be chosen for estimating the polarization gain imbalance, e.g. as described above with reference to equations (4)-(6).

In an embodiment, the processing at step 535 may include performing a new channel estimation for the apparatus in the back-to-back configuration, now with the equalized gains, to obtain a new subset $\{H_{b2b}\}$ of Jones matrices $H_{B2B}(n)$. The new subset $\{H_{b2b}\}$ provides an estimate of a gain-equalized DP channel response of the apparatus in the back-to-back configuration. The new subset $\{B_{b2b}\}$, or information indicative thereof, may be stored at step 535 as the estimated B2B DP channel response 710. In an embodiment, the processor 240 may store four vectors $H_{xxB2B}$, $H_{xyB2B}$, $H_{yxB2B}$, and $H_{yyB2B}$, each containing corresponding elements of Jones matrices $H_{nB2B}$ of the second subset $\{H_{b2b}\}$:

$$H_{xxB2B} = [h_{xxB2B}(1), h_{xxB2B}(2), ..., h_{xxB2B}(P)], \qquad (13)$$

$$H_{yyB2B} = [h_{yyB2B}(1), h_{yyB2B}(2), ..., h_{yyB2B}(P)], \qquad (14)$$

$$H_{xyB2B} = [h_{xyB2B}(1), h_{xyB2B}(2), ..., h_{xyB2B}(P)], \qquad (15)$$

$$H_{yxB2B} = [h_{yxB2B}(1), h_{yxB2B}(2), ..., h_{yxB2B}(P)]. \qquad (16)$$

The vectors $H_{xxB2B}$, $H_{xyB2B}$, $H_{yxB2B}$, and $H_{yyB2B}$ describe the DP response of the back-to-back channel as a function of discrete time.

In some embodiments, e.g. when the gain imbalances on the apparatus are found to be within pre-defined tolerances, the step of gain equalization may be omitted.

Once the apparatus is switched to the fiber sensing configuration (step 540), at step 562 the processor 140 or 240 may periodically generate measurements defining a set $\{\mathbf{H}(n)\}_N$ of $N$ Jones matrices $H(n)$, $n=1,..., N$, as described above with reference to FIG. 6, based on the signals received from the COR 130 or 230. This set $\{\mathbf{H}(n)\}_N$ of $N$ Jones matrices provides an estimate 720 of an end-to-end DP channel response in the fiber-sensing mode, which comprises a DP backscattering response of the optical fiber under test, and a DP channel response of the fiber-sensing apparatus itself. At step 565, the DP backscattering response of the optical fiber under test may be estimated based on the stored B2B DP channels response 710.

In an embodiment, the processing at steps 562 and 565 may include generating the four vectors $H_{xx}$, $H_{yy}$, $H_{xy}$, and $H_{yx}$ of $N$ complex values as described above with reference to equations (7)-(10), one vector per Jones matrix element, followed by a B2B response deconvolution to obtain an estimate 730 of the DP backscattering response of the optical fiber under test. The deconvolution process may include four independent deconvolutions: each of the four $N$-long. vectors $H_{xx}$, $H_{yy}$, $H_{xy}$, and $H_{yx}$ is deconvolved by a corresponding $P$-long B2B vector $H_{xxB2B}$, $H_{yyB2B}$, $H_{xyB2B}$, and $H_{yxB2B}$ stored in memory. The processor 140 or 240 may perform the deconvolutions in the time domain or in the frequency domain. This process produces a new set of four equalized backscattered channel estimations, e.g. in the form of four N-long vectors $\hat{H}_{xx}$, $\hat{H}_{yy}$, $\hat{H}_{xy}$, and $\hat{H}_{yx}$ or equalized response functions, which provide an estimate of the DP backscattering response of the optical fiber wherein the impact of the apparatus response is removed or at least lessened. In some embodiments, elements of the four equalized response functions $\hat{H}_{xx}$, $\hat{H}_{yy}$, $\hat{H}_{xy}$, and $\hat{H}_{yx}$ may be used to estimate the phase response of the optical fiber, e.g. based on equations (11) and (12).

A fiber-sensing apparatus of the present disclosure, e.g. apparatus 100 or apparatus 200, may estimate dual-polarization response functions of an optical communication channel, e.g. an optical fiber, using polarization-multiplexed transmission of sequences of test signals followed by a detection of the test signals in portion of the coherent light signal provided to a coherent optical receiver with polarization diversity, e.g. due to the back-scattering in the optical fiber, or back-to-back. In an example embodiment, the test signals described above with reference to FIGs. 1-3B, e.g. the test signals 111, and test signal pairs 211X, 211Y and 311X, 311Y, may comprise complementary data sequences, such as e.g. binary Golay sequences, transmitted over two orthogonal polarizations. A DP channel response may be extracted, e.g., by correlating these sequences with signals detected by the coherent optical receiver for two different polarizations of the back-scattered light signal. The use of complementary (Golay) data sequences for a DP optical fiber sensing is described in detail, for example, in a European Patent Application EP3460441, and in an article by C. Dorize and E. Awwad, "Enhancing the performance of coherent OTDR systems with polarization diversity complementary codes," Optics Express, 26(10), pp. 12878-12890, 2018, the content of both of which are incorporated herein by reference in their entirety.

Referring by way of example to apparatus 200 of FIG. 2, the test signals 233X and 233Y may include complementary data sequences, such as e.g. binary Golay sequences, which are transmitted by the COT 220 over the X- and Y-polarizations, respectively. In general, a Golay sequence $G(n)$ contains a sequence of values, where each value is either +1 or -1. Two complementary Golay sequences $G_a(n)$ and $G_b(n)$ exhibit the following property:

$$G_a(n) \otimes G_a(n) + G_b(n) \otimes G_b(n) = \delta(n) \qquad (17)$$

where $n$ is a symbol counter, $\otimes$ is the correlation operator, and $\delta$ is the Dirac delta function.

In an embodiment, the X-polarization and the Y-polarization tributaries of the optical signal 203 generated by the COT 220 are modulated with complementary (Golay) sequences $G_x(n)$ and $G_y(n)$ of length $N$, e.g. to have polarization components that may be represented as follows:

$$E_{tx}(n + kN_r) = G_x(n) \qquad (18)$$

$$E_{ty}(n + kN_r) = G_y(n) \qquad (19)$$

where $E_{tx}$ and $E_{ty}$ represent the X-polarization and the Y-polarization components of the optical signal 203 for perfectly balanced modulation, $N$, is the repetition period, $k$ is the $k$-th repetition of period $N_r$; a common scaling factor is omitted.

Optical signal received at the COR 230 may then comprise the following X- and Y-polarization components:

$$E_{rx}(n) = h_{xx}(n) * G_x(n) + h_{xy}(n) * G_y(n) \qquad (20)$$

$$E_{ry}(n) = h_{yx}(n) * G_x(n) + h_{yy}(n) * G_y(n) \qquad (21)$$

where $E_{rx}$ is the X polarization component, $E_{ry}$ is the Y polarization component, and $h_{xx}$, $h_{yy}$, $h_{xy}$, and $h_{yx}$ are elements of a 2x2 transmission channel matrix

$$\mathbf{H}(n) = \begin{bmatrix} h_{xx}(n) & h_{xy}(n) \\ h_{yx}(n) & h_{yy}(n) \end{bmatrix} \qquad (22)$$

describing a DP transmission channel from the COT 220 to the COR 230. Estimates of the polarization-dependent channel responses $h'_{xx}(n)$, $h'_{yx}(n)$, $h'_{xy}(n)$, $h'_{yy}(n)$ as observed at the COR 230 can then be computed by the processor 240, e.g. in one or more of the steps 530, 535, 562 of the methods 500 and 700 described above, by correlating the electrical signals 233X and 233Y received by the processor 240 from the COR 230 in the two polarization channels, denoted $J_x$ and $J_y$, with each of the complementary sequences $G_x(n)$ and $G_y(n)$:

$$h'_{xx}(n) = J_x(n) \otimes G_x(n) \qquad (23)$$

$$h'_{xy}(n) = J_x(n) \otimes G_y(n) \qquad (24)$$

$$h'_{yx}(n) = J_y(n) \otimes G_x(n) \qquad (25)$$

$$h'_{yy}(n) = J_y(n) \otimes G_y(n) \qquad (26)$$

where $J_x$ and $J_y$ are the electrical signals 233X, 233Y received by the processor 240 from the COR 230 in the two polarization channels.

In an embodiment wherein the COT 220 implements an IQ modulation format, such as e.g. a QPSK or a QAM, the test signals 211X and 211Y may include mutually orthogonal pairs of complementary binary (Golay) sequences, $G_{xI}(n)$ and $G_{xQ}(n)$ for modulating the X-polarization and $G_{YI}(n)$ and $G_{YQ}(n)$ for modulating the Y-polarization:

$$E_{tx}(n + kP) = G_{xI}(n) + jG_{xQ}(n) \qquad (27)$$

$$E_{ty}(n + kP) = G_{yI}(n) + jG_{yQ}(n) \qquad (28)$$

where the mutually orthogonal pairs of test sequences $G_{xI}(n)$, $G_{xQ}(n)$, and $G_{YI}(n)$, $G_{YQ}(n)$ satisfy conditions of mutual orthogonality as described e.g. in a European Patent Application EP3460441, and in an article by C. Dorize and E. Awwad, "Enhancing the performance of coherent OTDR systems with polarization diversity complementary codes," Optics Express, 26(10), pp. 12878-12890, 2018.

The correlation processes employed by the processor 240, e.g. in one or more of the steps 530, 535, 562 of the methods 500 and 700 described above, to determine the transmission channel responses may be, e.g. as follows:

$$h'_{xx}(n) = J_x(n) \otimes [G_{xI}(n) + jG_{xQ}(n)] \qquad (29)$$

$$h'_{xy}(n) = J_x(n) \otimes [G_{yI}(n) + jG_{yQ}(n)] \qquad (30)$$

$$h'_{yx}(n) = J_y(n) \otimes [G_{xI}(n) + jG_{xQ}(n)] \qquad (31)$$

$$h'_{yy}(n) = J_y(n) \otimes [G_{yI}(n) + jG_{yQ}(n)] \qquad (32)$$

In an embodiment, in the fiber sensing mode the processor 240 may compute a series of Jones matrices $H_n$, $n =$ 1,.., $N$, e.g. using correlation processing such as that described by equations (13)-(16) or (19)-(22). In the fiber-sensing mode of operation, these Jones matrices characterize the back-scattering responses of consecutive sections $622_1$, $622_2$, ..., $622_N$ of an optical fiber 611 under test (FIG. 6). In the back-to-back mode of operation, these Jones matrices characterize the back-to-back response of the apparatus.

The example embodiments described above are not intended to be limiting, and many variations will become apparent to a skilled reader having the benefit of the present disclosure. For example, test sequences that are coded differently than described above may be used for channel estimation. Furthermore in the description above, for purposes of explanation and not limitation, specific details are set forth such as particular architectures, interfaces, techniques, etc. in order to provide a thorough understanding of the present invention. In some instances, detailed descriptions of well-known devices, circuits, and methods are omitted so as not to obscure the description of the present invention with unnecessary detail. Thus, for example, it will be appreciated by those skilled in the art that block diagrams herein can represent conceptual views of illustrative circuitry embodying the principles of the technology. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, while the present invention has been particularly shown and described with reference to example embodiments as illustrated in the drawing, it will be understood by one skilled in the art that various changes in detail may be affected therein without departing from the spirit and scope of the invention as defined by the claims.

**Claims**

1.  An apparatus (100, 200) comprising:

    a digital source of test signals (110, 210);
    a coherent optical transmitter (COT, 120, 220) to transmit a light signal carrying different portions of the test signals on orthogonal polarizations thereof;
    a coherent optical receiver (COR, 130, 230) capable of separately measuring different polarization components of light received therein and to output signals indicative thereof;
    **characterized in that** the apparatus (100, 200) also comprises:

    an optical switch (160, 260) operable to selectively optically connect the COT (120, 220) and the COR (130, 230) to an end of an optical fiber link (150, 250) in a first configuration of the optical switch (160) and to optically back-to-back connect the COT (120, 220) and the COR (130, 230) in a second configuration of the optical switch (160, 260); and
    an electrical processor (140, 240) connected to receive the signals from the COR (130, 230) and configured to estimate a gain imbalance between a first and a second of the orthogonal polarizations in at least one of the COT (120, 220) and the COR (130, 230) based on the signals received from the COR (130, 230) in the second configuration, and to measure a portion of the light signal backscattered by the optical fiber link (150, 250) in the first configuration.

2.  The apparatus (100, 200) of claim 1 wherein at least one of the COR (130, 230) and the COT (120, 220) comprises variable gain amplifiers (VGAs, 222, 232).

3. The apparatus (100, 200) of claim 2 further comprising a control circuit (270) configured to tune the VGAs (222, 232) to a tuned state such that the gain imbalance is at least reduced.

4. The apparatus (100, 200) of claim 3 configured to establish, having the switch (160, 260) in the second configuration and the VGAs (222, 232) in the tuned state, a back-to-back communication channel from the digital source (110, 210) to the processor (140, 240), and wherein the processor (140, 240) is configured to estimate a first dual-polarization (DP) response function for the back-to-back communication channel.

5. The apparatus (100, 200) of claim 4 configured to operate in a fiber monitoring mode wherein the switch (160, 260) is in the second configuration and the VGAs (222, 232) are in the tuned state, wherein the processor (140, 240) is configured to estimate a DP optical backscattering response for the optical fiber link (150, 250) using the stored first response function.

6. The apparatus (100, 200) of claim 1, wherein the processor (140, 240) is configured to modify the test signals prior to transmitting to perform at least one of: digitally pre-compensate for the gain imbalance in the COT (120, 220), and to digitally pre-compensate a back-to-back channel response.

7. The apparatus (100, 200) of any one of the claims 1 to 6 wherein the apparatus is configured to estimate, based on the signals from the COR (130, 230) in the first and second configurations, a first set of 2x2 Jones channel matrices for the back-to-back communication channel, and a second set of 2x2 Jones channel matrices for backscattering in the optical fiber link (150, 250).

8. The apparatus (100, 200) of any one of claims 1 to 7 wherein the test signals comprise two pairs of complementary data sequences for transmitting over respective ones of the polarization components, and wherein the processor (140, 240) is configured to correlate the signals received from the COR (130, 230) with the pairs of complementary data sequences.

9. The apparatus (100, 200) of any one of claims 1 to 8 comprising a coherent light source (280) optically coupled to the COT (120, 220) for providing coherent light for modulating the test signals thereon and to the COR (130, 230) for providing a local oscillator signal.

10. A method comprising: operating a coherent optical transmitter (COT, 120, 220) and a coherent optical receiver (COR, 130, 230) in a first configuration, the COT (120, 220) and the COR (130, 230) being optically connected to a same end of an optical fiber link (150, 250) in the first configuration;
**characterized in that** the method also comprises:

switching to operate the COT (120, 220) and COR (130, 230) in a second configuration, the COR (130, 230) being optically back-to-back connected to the COT (120, 220) in the second configuration;
processing signals from the COR (130, 230) to estimate a polarization gain imbalance in at least one of the COT (120, 220) and the COR (130, 230) in the second configuration; and
processing signals from the COR (130, 230) to measure a portion of the light signal backscattered by the optical fiber link (150, 250) in the first configuration; and
wherein the COT (120, 220) transmits a light signal carrying different test signals on orthogonal polarizations thereof in each of the configurations; and
wherein the COR (130, 230) separately measures different polarization components of received light and outputs signals indicative thereof in both configurations.

11. The method of claim 10 wherein at least one of the COR (130, 230) and the COT (120, 220) comprises a plurality of variable gain amplifiers (VGAs, 222, 232) and wherein the method further comprises tuning at least one of the VGAs (222, 232) to a tuned state to at least reduce the polarization gain imbalance.

12. The method of claim 11 further comprising processing the signals received from the COR (130, 230) in the back-to-back configuration with the VGAs (222, 232) in the tuned state, to estimate a back-to-back dual-polarization (DP) response function.

13. The method of claim 12 further comprising estimating, for the first configuration with the VGAs (222, 232) in the tuned state, a DP channel response of the optical fiber link (150, 250) using the stored back-to-back DP response function.

14. The method according to any one of the claims 10 to 13 wherein the test signals comprise two orthogonal pairs of complementary data sequences, comprising modulating said pairs over corresponding ones of the two polarizations.

15. The method according to any one of the claims 10 to 14 comprising computing a set of Jones matrices based on the signals received from the COR (130, 230) in the first configuration.

## Patentansprüche

1. Vorrichtung (100, 200), die Folgendes umfasst:

   eine digitale Quelle von Testsignalen (110, 210);
   einen kohärenten optischen Sender (COT, 120, 220) zum Übertragen von Lichtsignalen, die verschiedene Abschnitte von Testsignalen auf orthogonalen Polarisationen davon transportieren;
   einen kohärenten optischen Empfänger (COR 130, 230), der in der Lage ist, verschiedene Polarisationskomponenten von Licht, das darin empfangen wird, separat zu messen und Signale die diese anzeigen, auszugeben;
   **dadurch gekennzeichnet, dass** die Vorrichtung (100, 200) außerdem Folgendes umfasst:

   einen optischen Schalter (160, 260), der betreibbar ist, den COT (120, 220) und den COR (130, 230) in einer ersten Auslegung des optischen Schalters (160) selektiv optisch mit einem Ende einer faseroptischen Verbindung (150, 250) zu verbinden und den COT (120, 220) und den COR (130, 230) in einer zweiten Auslegung des optischen Schalters (160, 260) Rücken an Rücken zu verbinden; und
   einen elektrischen Prozessor (140, 240), der verbunden ist, um die Signale vom COR (130, 230) zu empfangen, und dazu ausgelegt ist, ein Verstärkungsungleichgewicht zwischen einer ersten und einer zweiten der orthogonalen Polarisationen in mindestens einem des COT (120, 220) und des COR (130, 230) auf Basis der Signale zu schätzen, die in der zweiten Auslegung vom COR (130, 230) empfangen werden, und einen Abschnitt des Lichtsignals, das von der faseroptischen Verbindung (150, 250) in der ersten Auslegung rückgestreut wird, zu messen.

2. Vorrichtung (100, 200) nach Anspruch 1, wobei mindestens einer des COR (130, 230) und des COT (120, 220) variable Verstärkungsverstärker (VGAs, 222, 232) umfasst.

3. Vorrichtung (100, 200) nach Anspruch 2, die ferner eine Steuerschaltung (270) umfasst, die dazu ausgelegt ist, die VGAs (222, 232) auf einen abgestimmten Zustand abzustimmen, derart, dass das Verstärkungsungleichgewicht mindestens reduziert ist.

4. Vorrichtung (100, 200) nach Anspruch 3, die dazu ausgelegt ist, wenn sich der Schalter (160, 260) in der zweiten Auslegung befindet und sich die VGAs (222, 232) im abgestimmten Zustand befinden, einen Rücken-an-Rücken-Kommunikationskanal von der digitalen Quelle (110, 210) zum Prozessor (140, 240) aufzubauen, und wobei der Prozessor (140, 240) dazu ausgelegt ist, eine erste duale Polarisations(DP)-Antwortfunktion für den Rücken-an-Rücken-Kommunikationskanal zu schätzen.

5. Vorrichtung (100, 200) nach Anspruch 4, die dazu ausgelegt ist, in einem Faserüberwachungsmodus betrieben zu werden, wobei sich der Schalter (160, 260) in der zweiten Auslegung befindet und sich die VGAs (222, 232) im abgestimmten Zustand befinden, wobei der Prozessor (140, 240) dazu ausgelegt ist, unter Verwendung der gespeicherten ersten Antwortfunktion eine optische DP-Rückstreuantwort für die faseroptische Verbindung (150, 250) zu schätzen.

6. Vorrichtung (100, 200) nach Anspruch 1, wobei der Prozessor (140, 240) dazu ausgelegt ist, die Testsignale vor dem Übertragen zu modifizieren, um mindestens eines von Folgendem durchzuführen: digitale Vorabkompensation für das Verstärkungsungleichgewicht im COT (120, 220) und digitale Vorabkompensation einer Rücken-an-Rücken-Kanalantwort.

7. Vorrichtung (100, 200) nach einem der Ansprüche 1 bis 6, wobei die Vorrichtung dazu ausgelegt ist, in der ersten und der zweiten Auslegung auf Basis der Signale vom COR (130, 230) einen ersten Satz von 2x2-Jones-Kanalmatrices für den Rücken-an-Rücken-Kommunikationskanal und einen zweiten Satz von 2x2-Jones-Kanalmatrices zum Rückstreuen in der faseroptischen Verbindung (150, 250) zu schätzen.

8. Vorrichtung (100, 200) nach einem der Ansprüche 1 bis 7, wobei die Testsignale zwei Paare von komplementären Datensequenzen zum Übertragen über jeweilige der Polarisationskomponenten umfassen und wobei der Prozessor (140, 240) dazu ausgelegt ist, die vom COR (130, 230) empfangenen Signale mit Paaren von komplementären Datensequenzen zu korrelieren.

9. Vorrichtung (100, 200) nach einem der Ansprüche 1 bis 8, die eine kohärente Lichtquelle (280) umfasst, zum Bereitstellen von kohärentem Licht zum Modulieren der Testsignale darauf die an den COT (120, 220) und zum Bereitstellen eines lokalen Oszillatorsignals optisch an den COR (130, 230) gekoppelt ist.

10. Verfahren, das Folgendes umfasst: Betreiben eines kohärenten optischen Senders (COT, 120, 220) und eines kohärenten optischen Empfängers (COR, 130, 230) in einer ersten Auslegung, wobei der COT (120, 220) und der COR (130, 230) in der ersten Auslegung mit einem selben Ende einer faseroptischen Verbindung (150, 250) optisch verbunden sind;
dadurch gekennzeichnet, dass das Verfahren außerdem Folgendes umfasst:

Umschalten, um den COT (120, 220) und den COR (130, 230) in einer zweiten Auslegung zu betreiben, wobei der COR (130, 230) in der zweiten Auslegung Rücken an Rücken optisch mit dem COT (120, 220) verbunden ist;
Verarbeiten von Signalen vom COR (130, 230), um ein Polarisationsverstärkungsungleichgewicht in mindestens einem des COT (120, 220) und des COR (130, 230) in der zweiten Auslegung zu schätzen; und
Verarbeiten von Signalen vom COR (130, 230), um in der ersten Auslegung einen Abschnitt des Lichtsignals, das von der faseroptischen Verbindung (150, 250) rückgestreut wird, zu messen; und
wobei der COT (120, 220) ein Lichtsignal überträgt, das verschiedene Testsignale auf orthogonalen Polarisationen davon in jeder der Auslegungen transportiert; und
wobei der COR (130, 230) in beiden Auslegungen verschiedene Polarisationskomponenten von empfangenem Licht separat misst und Signale, die diese anzeigen, überträgt.

11. Verfahren nach Anspruch 10, wobei mindestens einer des COR (130, 230) und des COT (120, 220) eine Vielzahl von variablen Verstärkungsverstärkern (VGAs, 222, 232) umfasst und wobei das Verfahren ferner das Abstimmen von mindestens einem der VGAs (222, 232) auf einen abgestimmten Zustand umfasst, um mindestens das Polarisationsverstärkungsungleichgewicht zu reduzieren.

12. Verfahren nach Anspruch 11, das ferner das Verarbeiten der vom COR (130, 230) empfangenen Signale in der Rücken-an-Rücken-Auslegung umfasst, wenn sich die VGAs (222, 232) im abgestimmten Zustand befinden, um eine duale Rücken-an-Rücken-Polarisations(DP)-Antwortfunktion zu schätzen.

13. Verfahren nach Anspruch 12, das ferner das Schätzen einer DP-Kanalantwort der faseroptischen Verbindung (150, 250) unter Verwendung der gespeicherten Rücken-an-Rücken-DP-Antwortfunktion für die erste Auslegung, wenn sich die VGAs (222, 232) im abgestimmten Zustand befinden, umfasst.

14. Verfahren nach einem der Ansprüche 10 bis 13, wobei die Testsignale zwei orthogonale Paare von komplementären Datensequenzen umfassen, das das Modulieren der Paare über entsprechende der zwei Polarisationen umfasst.

15. Verfahren nach einem der vorhergehenden Ansprüche 10 bis 14, das in der ersten Auslegung das Berechnen eines Satzes von Jones-Matrices auf Basis der vom COR (130, 230) empfangenen Signale umfasst.

**Revendications**

1. Appareil (100, 200) comprenant :

une source numérique de signaux d'essai (110, 210) ;
un émetteur optique cohérent (COT, 120, 220) pour transmettre un signal lumineux transportant différentes parties des signaux d'essai sur des polarisations orthogonales de celui-ci ;
un récepteur optique cohérent (COR, 130, 230) capable de mesurer séparément différentes composantes de polarisation de la lumière qu'il reçoit, et d'émettre des signaux indicatifs de celui-ci ;

**caractérisé en ce que** l'appareil (100, 200) comprend également :

un commutateur optique (160, 260) pouvant fonctionner pour connecter optiquement le COT (120, 220) et le COR (130, 230) sélectivement à une extrémité d'une liaison par fibre optique (150, 250) dans une première configuration du commutateur optique (160), et pour connecter optiquement le COT (120, 220) et le COR (130, 230) dos à dos dans une deuxième configuration du commutateur optique (160, 260) ; et un processeur électrique (140, 240) connecté pour recevoir les signaux du COR (130, 230) et configuré pour estimer un déséquilibre de gain entre une première et une deuxième des polarisations orthogonales dans au moins un du COT (120, 220) et du COR (130, 230) sur la base des signaux reçus du COR (130, 230) dans la deuxième configuration, et pour mesurer une partie du signal lumineux rétrodiffusé par la liaison par fibre optique (150, 250) dans la première configuration.

2. Appareil (100, 200) selon la revendication 1 dans lequel au moins un du COR (130, 230) et du COT (120, 220) comprend des amplificateurs à gain variable (VGA, 222, 232).

3. Appareil (100, 200) selon la revendication 2, comprenant en outre un circuit de commande (270) configuré pour accorder les VGA (222, 232) à un état accordé de sorte que le déséquilibre de gain soit au moins réduit.

4. Appareil (100, 200) selon la revendication 3, configuré pour établir, avec le commutateur (160, 260) dans la deuxième configuration et les VGA (222, 232) dans l'état accordé, un canal de communication dos à dos de la source numérique (110, 210) au processor (140, 240), et dans lequel le processeur (140, 240) est configuré pour estimer une première fonction de réponse à double polarisation (DP) pour le canal de communication dos à dos.

5. Appareil (100, 200) selon la revendication 4, configuré pour fonctionner dans un mode de surveillance de fibre, dans lequel le commutateur (160, 260) est dans la deuxième configuration et les VGA (222, 232) sont dans l'état accordé, dans lequel le processeur (140, 240) est configuré pour estimer une réponse de rétrodiffusion optique DP pour la liaison par fibre optique (150, 250) en utilisant la première fonction de réponse stockée.

6. Appareil (100, 200) selon la revendication 1, dans lequel le processeur (140, 240) est configuré pour modifier les signaux d'essai avant la transmission afin d'effectuer au moins une parmi : une pré-compensation numérique du déséquilibre de gain dans le COT (120, 220), et une pré-compensation numérique d'une réponse de canal dos à dos.

7. Appareil (100, 200) de l'une des revendications 1 à 6 dans lequel l'appareil est configuré pour estimer, sur la base des signaux provenant du COR (130, 230) dans les première et deuxième configurations, un premier ensemble de matrices de canal de Jones 2×2 pour le canal de communication dos à dos, et un deuxième ensemble de matrices de canal de Jones 2×2 pour la rétrodiffusion dans la liaison par fibre optique (150, 250).

8. Appareil (100, 200) selon l'une des revendications 1 à 7, dans lequel les signaux d'essai comprennent deux paires de séquences de données complémentaires pour la transmission sur des composantes respectives des composantes de polarisation, et dans lequel le processeur (140, 240) est configuré pour corréler les signaux reçus du COR (130, 230) avec les paires de séquences de données complémentaires.

9. Appareil (100, 200) selon l'une des revendications 1 à 8, comprenant une source de lumière cohérente (280) couplée optiquement au COT (120, 220) pour fournir une lumière cohérente pour moduler les signaux d'essai sur celui-ci, et couplée optiquement au COR (130, 230) pour fournir un signal d'oscillateur local.

10. Procédé comprenant : l'actionnement d'un émetteur optique cohérent (COT, 120, 220) et d'un récepteur optique cohérent (COR, 130, 230) dans une première configuration, le COT (120, 220) et le COR (130, 230) étant connectés optiquement à une même extrémité d'une liaison par fibre optique (150, 250) dans la première configuration ; **caractérisé en ce que** le procédé comprend également :

la commutation pour actionner le COT (120, 220) et le COR (130, 230) dans une deuxième configuration, le COR (130, 230) étant connecté optiquement au COT (120, 220) dos à dos dans la deuxième configuration ; le traitement de signaux provenant du COR (130, 230) pour estimer un déséquilibre de gain de polarisation dans au moins un du COT (120, 220) et du COR (130, 230) dans la deuxième configuration ; et le traitement de signaux provenant du COR (130, 230) pour mesurer une partie du signal lumineux rétrodiffusé par la liaison par fibre optique (150, 250) dans la première configuration ; et dans lequel le COT (120, 220) transmet un signal lumineux transportant différents signaux d'essai sur des polarisations orthogonales de celui-ci dans chacune des configurations ; et

dans lequel le COR (130, 230) mesure séparément différentes composantes de polarisation de la lumière reçue, et émet des signaux indicatifs de celui-ci dans les deux configurations.

11. Procédé selon la revendication 10, dans lequel au moins un du COR (130, 230) et du COT (120, 220) comprend une pluralité d'amplificateurs de gain variable (VGA, 222, 232), et dans lequel le procédé comprend en outre l'accord d'au moins un des VGA (222, 232) à un état accordé pour au moins réduite le déséquilibre de gain de polarisation.

12. Procédé selon la revendication 11, comprenant en outre le traitement des signaux reçus du COR (130, 230) dans la configuration dos à dos avec les VGA (222, 232) dans l'état accordé, pour estimer une fonction de réponse à double polarisation (DP) dos à dos.

13. Procédé selon la revendication 12, comprenant en outre l'estimation, pour la première configuration avec les VGA (222, 232) dans l'état accordé, d'une réponse de canal DP de la liaison par fibre optique (150, 250) en utilisant la fonction de réponse DP dos à dos stockée.

14. Procédé selon l'une des revendications 10 à 13, dans lequel les signaux d'essai comprennent deux paires orthogonales de séquences de données complémentaires, comprenant la modulation desdites paires sur des polarisations correspondantes des deux polarisations.

15. Procédé selon l'une des revendications 10 à 14, comprenant le calcul d'un ensemble de matrices de Jones sur la base des signaux reçus du COR (130, 230) dans la première configuration.

100

Test Sequences — 110

111

COT — 120
X
Y
103

109

Switch — 160

150

151
103

105

105

COR — 130
X
Y

133

Processor — 140

FIG. 1

FIG. 2

FIG. 3A

EP 4 283 275 B1

300B

Test Sequence — 310

311X
311Y

Pre-comp — 314

DAC — 316

from controller 270

Modulation Signal Generator — 318

322

IQx — 350X

IQy — 350Y

355

355

264

151

To 266

Laser — 280

To O/E 234

FIG. 3B

FIG. 4

<u>500</u>

```
┌─────────────────────────┐
│  COT transmitting light signal │
│  carrying test signals in X and │ ⟍ 510
│        Y polarizations          │
└─────────────────────────┘
              │
              ▼
┌─────────────────────────┐
│   Connecting COT to COR in a    │
│    back-to-back configuration   │ ⟍ 520
└─────────────────────────┘
              │
              ▼
┌─────────────────────────┐
│    Estimating and at least partially │
│   compensating polarization gain    │ ⟍ 530
│  imbalance in at least one of the COT │
│          and the COR            │
└─────────────────────────┘
              │
              ▼
┌─────────────────────────┐
│   Connecting COT and COR to an   │
│      end of an optical fiber    │ ⟍ 540
└─────────────────────────┘
              │
              ▼
┌─────────────────────────┐
│   Measuring backscattered light in │
│         two polarizations       │ ⟍ 550
└─────────────────────────┘
              │
              ▼
┌─────────────────────────┐
│   Processing the measurements to │
│        detect fiber events      │ ⟍ 560
└─────────────────────────┘
```

2/3/9

FIG. 5

FIG. 6

700

```
┌─────────────────────────────────────┐
│ COT transmitting light signal carrying │───510
│ test sequences in X and Y polarizations │
└─────────────────────────────────────┘
                    │
                    ▼
┌─────────────────────────────────────┐
│ Connecting COT to COR in a back-to-  │───520
│ back configuration                   │
└─────────────────────────────────────┘
                    │
                    ▼
┌─────────────────────────────────────┐
│ Estimating and at least partially compensating │───530
│ gain imbalance in the apparatus      │
└─────────────────────────────────────┘
                    │
                    ▼
        ┌───────────────────────────┐
  /710/◄│ Measuring a back-to-back  │───535
        │ channel response          │
        └───────────────────────────┘
                    │
                    ▼
        ┌───────────────────────────┐
        │ Connecting COT and COR to an │───540
        │ end of an optical fiber   │
        └───────────────────────────┘
                    │
                    ▼
        ┌───────────────────────────┐
        │ Measuring backscattered light in │
        │ two polarizations         │───550
        └───────────────────────────┘
                    │
                    ▼
  /720/◄┌───────────────────────────┐
        │ Estimating DP channel response │
        │ based on the back-scattered light │───562
        └───────────────────────────┘
                    │
                    ▼
        ┌───────────────────────────┐
        │ Estimating fiber channel response │
        │ using the back-to-back response │───565
        └───────────────────────────┘
                    │
                    ▼
                  /730/
```

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3460441 A

- EP 1870689 A

**Non-patent literature cited in the description**

- **S. GUERRIER** ; **C. DORIZE** ; **E. AWWAD** ; **J. RENAUDIER**. Introducing coherent MIMO sensing, a fading-resilient, polarization-independent approach to φ-OTDR. *Opt. Express*, July 2020, vol. 28 (14), 21081

- **C. DORIZE** ; **E. AWWAD**. Enhancing the performance of coherent OTDR systems with polarization diversity complementary codes. *Optics Express*, 2018, vol. 26 (10), 12878-12890